# FASCICULE DE BREVET EUROPEEN

(11) **EP 1 044 599 B1**
(45) Date de publication et mention de la délivrance du brevet: **04.02.2004**
(21) Numéro de dépôt: 00400862.9
(22) Date de dépôt: 29.03.2000
(51) Int. Cl.: A01G 1/00, A01G 31/02

(54) **Procédé de végétalisation de surface et bac à réserve d'eau utilisé dans ledit procédé**
Verfahren zur Flächebegrünung und Behälter mit Wasservorrat zur Verwendung in diesem Verfahren
Process for greening areas and container with a water reserve used in said process

(30) Priorité: 14.04.1999 FR 9904655
(43) Date de publication de la demande: 18.10.2000
(73) Titulaire: Lame, Raphael, 41160 Moisy (FR)
(72) Inventeur: Lame, Raphael, 41160 Moisy (FR)
(74) Mandataire: Debay, Yves

(56) Documents cités:
- WO-A-99/51080
- DE-U- 29 803 354
- FR-A- 2 703 213
- DATABASE WPI Section PQ, Week 199843 Derwent Publications Ltd., London, GB; Class P13, AN 1998-498897 XP002127031 & JP 10 215687 A (CI KASEI CO LTD), 18 août 1998 (1998-08-18)
- DATABASE WPI Section PQ, Week 199919 Derwent Publications Ltd., London, GB; Class P13, AN 1999-222140 XP002127032 & JP 11 056100 A (SHIMAKAWA M), 2 mars 1999 (1999-03-02)

## Description

L'invention concerne un procédé de végétalisation de diverses surfaces et un bac à réserve d'eau permettant la mise en oeuvre du procédé.

De nombreux procédés ont été proposés pour effectuer la végétalisation de surfaces, tels que toitures, terrasses ou balcons par exemple. Certains de ces procédés consistent dans une première étape à réaliser un support drainant sur la surface à végétaliser pour permettre l'écoulement de l'eau. Ce support drainant peut être constitué d'une couche de matériau, tel que de l'argile expansée ou de la pouzzolane, directement déposée sur la surface. Le support drainant peut également être constitué par un ensemble de bacs rétenteurs d'eau, tel que, par exemple, celui décrit dans le brevet français 2 703 213. Les bacs sont constitués d'une plaque munie de petites alvéoles reliées les unes aux autres par un système de canaux. La plaque est surmontée d'un filtre, tel qu'un feutre synthétique non tissé.

Quel que soit le type de support, celui-ci est installé tel quel sur la surface à végétaliser. Une couche de substrat est ensuite déposée sur le support drainant et des graines ou boutures sont plantées sur ce substrat. Un tapis précultivé, sous forme de rouleaux, peut également être déroulé directement sur le support drainant. Ces différentes opérations sont réalisées par les mêmes personnes qui, généralement, ne possèdent pas de compétences horticoles. Actuellement, cette installation est le plus souvent réalisée par les entreprises chargées des traitements d'étanchéité de la surface. La mise en place de la végétation est parfois suivie d'un simple arrosage mais son développement, qui est dépendant des conditions météorologiques, n'est soumis à aucun traitement particulier. La végétalisation de la surface peut être très longue à s'établir et un développement harmonieux de la végétalisation n'est pas garanti.

Un premier but de l'invention est de proposer un procédé de végétalisation palliant les inconvénients de l'art antérieur précédemment cités.

Ce but est atteint par le procédé de végétalisation selon la revendication 1.

Des développements supplémentaires de l'invention sont décrits dans les revendications 2 à 5.

Un autre but de l'invention est de proposer des bacs à réserve d'eau pour la mise en oeuvre du procédé.

Ce but est atteint par les bacs à réserve d'eau selon la revendication 6.

Des développements supplémentaires de l'invention sont décrits dans les revendications 7 à 26.

D'autres particularités et avantages de la présente invention apparaîtront plus clairement à la lecture de la description ci-après faite en référence aux dessins annexés dans lesquels :
- la figure 1a représente une vue de dessus d'un bac selon un premier mode de réalisation ;
- la figure 1b représente une vue partielle en perspective du bac illustré à la figure 1a ;
- la figure 1c représente une vue en coupe, suivant le plan de coupe (BB') de la figure 1a, d'un bac précultivé, selon le premier mode de réalisation ;
- la figure 2a représente une vue de dessus d'un bac selon un deuxième mode de réalisation ;
- la figure 2b représente une vue partielle en perspective du bac illustré à la figure 2a ;
- la figure 2c représente une vue en coupe suivant le plan transversal (CC') d'un bac précultivé selon le deuxième mode de réalisation ;
- la figure 3 représente une vue en coupe suivant le plan transversal d'un bac précultivé, selon un troisième mode de réalisation ;
- la figure 4a représente une vue partielle en perspective d'un bac selon un quatrième mode de réalisation ;
- la figure 4b représente une vue en coupe suivant un plan transversal d'un bac précultivé selon le quatrième mode de réalisation.
- les figures 5a et 5b représentent respectivement une vue partielle en perspective et une vue partielle en coupe, de deux bacs assemblés selon un mode de réalisation ;
- les figures 6a et 6b représentent respectivement une vue partielle en perspective de deux moyens complémentaires d'accrochage et une vue partielle, en coupe, de deux bacs assemblés et munis desdits moyens complémentaires ;

Les figures les 1a, 1b et 1c représentent un bac à réserve d'eau selon un premier mode de réalisation. Le bac (1) à réserve d'eau selon l'invention comprend un fond (29), qui peut être de forme générale rectangulaire, et un bord latéral (7) entourant ledit fond. Le bord latéral (7) est constitué de deux parois longitudinales (10,11) opposées et de deux parois transversales opposées (8, 9). Le bord latéral peut se prolonger horizontalement par un rebord (22).

Le bac comprend une pluralité de cloisons de séparation (60) formant une pluralité de renfoncements (12) avec le fond (29). Chaque cloison de séparation est constituée de deux parois verticales (26a, 26b) et d'une surface dite support (6) reliant les bords supérieurs des deux parois verticales (26a, 26b), la surface support (6) étant sensiblement parallèle au fond (29). Les renfoncements (12) ainsi formés peuvent être de forme variable. A titre d'exemple non limitatif, le bac (1) possède des renfoncements (12), pouvant être identiques, en forme de canaux, disposés parallèlement aux parois longitudinales (10, 11) et se prolongeant d'une paroi transversale (8) à l'autre (9). Chaque paroi longitudinale forme un renfoncement avec une paroi verticale d'une cloison de séparation et le fond. Dans ce mode de réalisation, le fond du bac peut s'interrompre entre les parois verticales d'une cloison de séparation. La hauteur des parois longitudinales et latérales du bac est supérieure à la hauteur des parois verticales formant les renfoncements. Les parois longitudinales et latérales du bac, ainsi que les parois verticales (26a, 26b) formant les renfoncements (12), peuvent être inclinées par rapport au fond (6).

Les renfoncements (12) sont reliés les uns aux autres par des moyens de communication. Ces moyens de communication peuvent être constitués d'une ou plusieurs voies de communication (13), telles que, par exemple des tubes, disposés parallèlement aux parois transversales (8, 9) et traversant les parois verticales (26a, 26b) des cloisons de séparation (60) formant les renfoncements (12). Les portions de voies de communication comprises à l'intérieur des renfoncements (12) possèdent un ensemble d'ouvertures ou perforations (14). Lorsque le bac (1) est rempli d'eau, celle-ci se répartit entre les différents renfoncements (12) par les voies de communication (13) perforées. Le réseau de renfoncements ainsi formé constitue la réserve d'eau du bac. A titre d'exemple, le réseau de renfoncements constitue une réserve d'environ 10 litres / m².

En référence à la figure 1c, chaque voie de communication (13) peut se prolonger au-delà des renfoncements (12) en traversant les parois longitudinales (10, 11). L'extrémité (15, 16) d'une voie de communication (13) peut être connectée, de manière étanche, à une source d'eau pour effectuer le remplissage du bac. Les extrémités (15, 16) des voies de communication peuvent également servir à connecter de manière étanche les bacs les uns aux autres afin de répartir de façon homogène l'eau entre les différents bacs. Les extrémités des voies de communication peuvent être connectées par tout type de moyen connu, une extrémité (15) possédant un moyen complémentaire de l'autre extrémité (16). Un seul bac peut être connecté à une source d'eau pour alimenter l'ensemble des bacs. Les extrémités des tubes qui ne sont pas utilisées peuvent être obturées.

Les renfoncements (12) du bac peuvent être remplis d'agrégats minéraux (4). Un filtre (5) microporeux, par exemple, non tissé, est disposé sur les surfaces support (6) et sur les agrégats (4) qui sont sensiblement au même niveau. Le filtre (5) et les renfoncements remplis d'agrégats (4) constituent le complexe drainant du bac (1). Une couche de substrat (2) de culture est déposée sur le filtre (5). La composition du substrat (2) peut être adaptée au type de culture réalisée dans le bac. Le plan supérieur de la couche de substrat (2) est sensiblement au niveau du rebord (22) du bac. A titre d'exemple, le bac possède une hauteur totale de l'ordre de 7 centimètres et est muni de renfoncements de l'ordre de 4 centimètres. Un tel bac permet ainsi d'accueillir une couche de substrat d'environ trois centimètres. La végétation souhaitée, par exemple, sous forme de graine ou bouture, est ensuite semée ou plantée sur le substrat. Des rouleaux, de pelouse par exemple, peuvent également être déroulés sur le substrat. Le filtre (5) retient le substrat (2) au-dessus des surfaces support (6) et des agrégats (4). Le filtre, en appui sur les surfaces support et les agrégats, empêche le substrat de se répandre dans les renfoncements (12) tout en laissant passer l'eau et les racines des végétaux le traverser. Selon un autre mode de réalisation, le complexe drainant peut être formé par une grille sur laquelle un filtre microporeux est déposé, la grille étant disposée sur les surfaces support (6) des cloisons de séparation. Ainsi, le remplissage des renfoncements par des agrégats n'est plus nécessaire. Le remplacement des agrégats par une grille permet de réduire le poids du bac. De même, suivant la rigidité du matériau utilisé pour constituer le filtre et la taille des renfoncements, la grille pourra être omise.

Le bac (1) peut ainsi être cultivé par un spécialiste, par exemple en pépinière. Plusieurs bacs peuvent être connectés les uns aux autres par les extrémités des tubes lors de la culture des bacs. L'extrémité d'un tube peut servir à connecter l'ensemble de bacs à une source d'eau. L'eau apportée peut être additionnée d'éléments nutritifs.

Les bacs précultivés peuvent ensuite être transportés et agencés sur la surface de pose, telle que toitures, terrasses ou balcons. Ces dernières opérations ne nécessitent aucune compétence horticole. Les bacs sont connectés les uns aux autres et à une source d'eau par les extrémités des voies de communication (13). La pose de bacs précultivés permet d'obtenir une végétalisation immédiate de la surface. Le procédé de végétalisation selon l'invention assure une végétalisation de qualité. Les dimensions des bacs sont déterminées pour permettre aisément leur manipulation, leur transport et leur pose. A titre d'exemple, chaque bac mesure 60 centimètres de longueur et 40 centimètres de largeur.

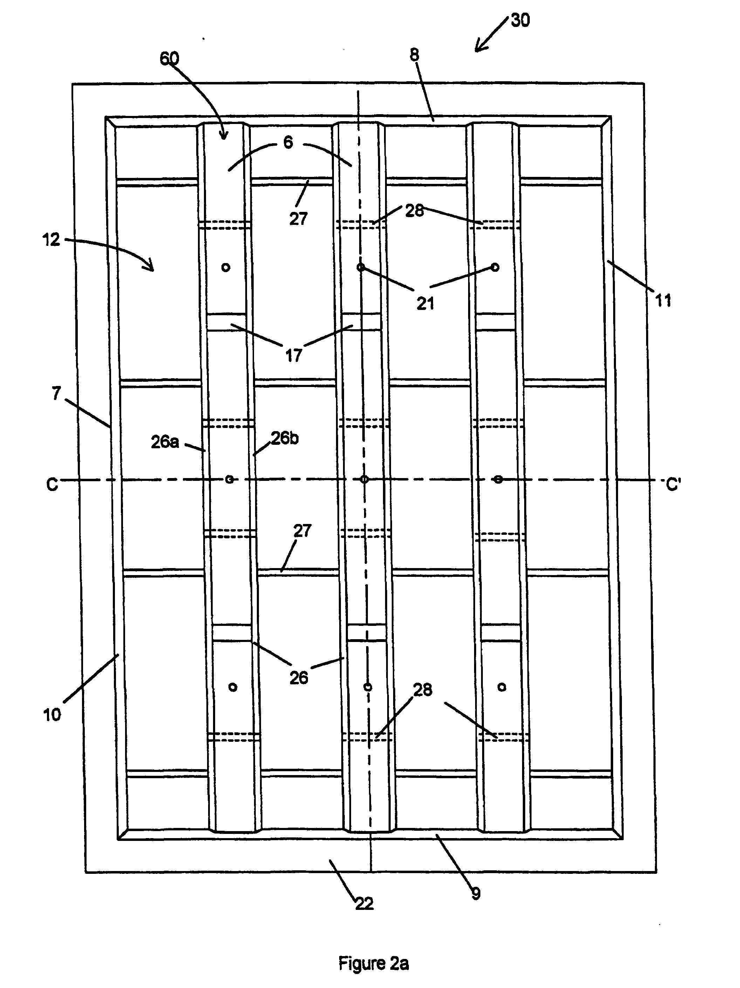

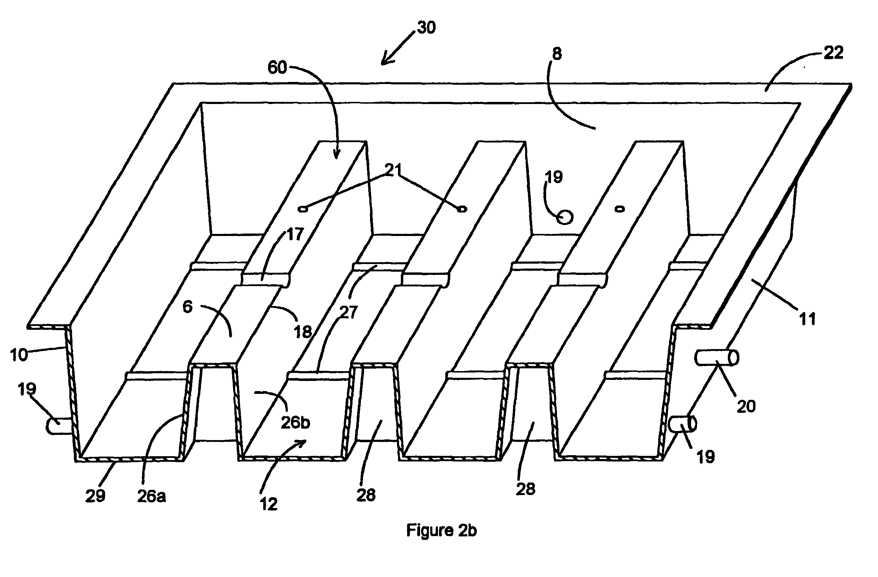

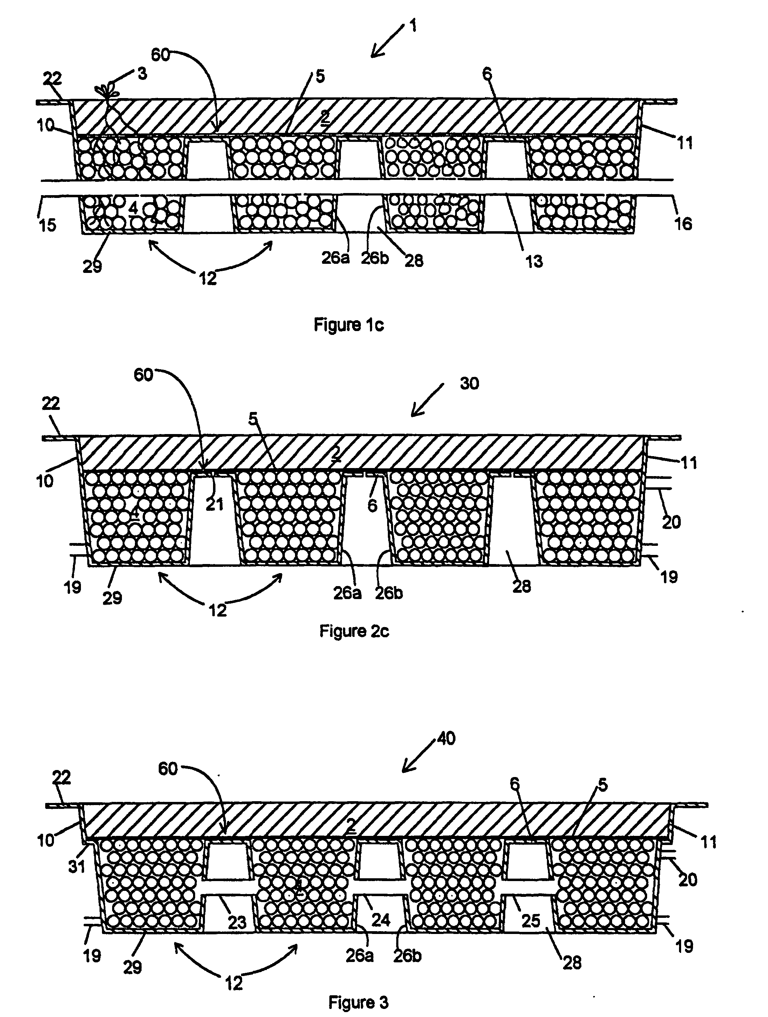

Les figures 2a, 2b, 2c représentent un bac (30) à réserve d'eau selon un deuxième mode de réalisation. Les voies de communication perforées, précédemment décrits, constituant les moyens de communication entre les renfoncements, sont remplacés par des canaux (17), en forme de goulotte, formés sur les surfaces support (6). Chaque canal (17) relie les bords supérieurs (18) des parois verticales (26a, 26b) d'une cloison (60) de séparation de deux renfoncements voisins. Le bord latéral (7) comprend des moyens, débouchant chacun sur un renfoncement et permettant soit l'alimentation en eau de la réserve d'eau, constituée par les renfoncements reliés entre eux par le réseau de canaux, soit la connexion de la réserve d'eau à celle du ou des bacs voisins. A titre d'exemple, les parois longitudinales et/ou transversales présentent une ou plusieurs ouvertures permettant la connexion, de manière étanche, au moyen d'un tuyau (19) par exemple, à la réserve d'eau du ou des bacs voisins. Les assemblages des tuyaux dans les ouvertures peuvent être effectués par des systèmes de clipsage. Chacun de ces tuyaux (19) débouche, par exemple, dans la partie inférieure du renfoncement, à proximité du fond (29), afin de permettre une répartition homogène de l'eau entre les bacs, quel que soit le niveau d'eau, même lorsque celui-ci est faible. Le bac peut comporter un moyen spécifiquement destiné pour la connexion à une source d'eau. L'extrémité d'un tuyau (20) est, par exemple, assemblée de manière étanche à une ouverture présente sur le bord latéral (7) du bac, débouchant, par exemple, dans la partie supérieure du renfoncement, en dessous du plan des surfaces support (6).

La figure 3 représente un troisième mode de réalisation, dans lequel les moyens de communication entre les renfoncements du bac (40) sont constitués par un ensemble de voies de communication (23, 24, 25), telles que des tubes par exemple, chaque voie de communication reliant un renfoncement à un renfoncement voisin. Les extrémités des voies de communication débouchent sur les parois (26a, 26b) des cloisons (60) formant les renfoncements. Le bac comprend des moyens permettant l'alimentation en eau de la réserve d'eau et/ou la connexion de la réserve d'eau à celle du ou des bacs voisins. Ces moyens (19, 20) peuvent être identiques à ceux du bac (30) selon le deuxième mode de réalisation.

Dans ce mode de réalisation, les parois transversales et longitudinales (10, 11) constituant le bord latéral, présentent un épaulement orienté vers l'intérieur du bac et disposé sensiblement dans le même plan que celui des surfaces support (6). Ainsi, un filtre peut être disposé au-delà des renfoncements et reposer sur l'épaulement (31) du bord latéral. Les bords du filtre (5) n'étant plus au-dessus des renfoncements (12), la retenue, au-dessus des renfoncements, du substrat (2) par le filtre (5) est mieux assurée. En référence aux figures 2c et 3, les bacs selon les deuxième et troisième modes de réalisation sont précultivés de la même façon que le bac selon le premier mode de réalisation.

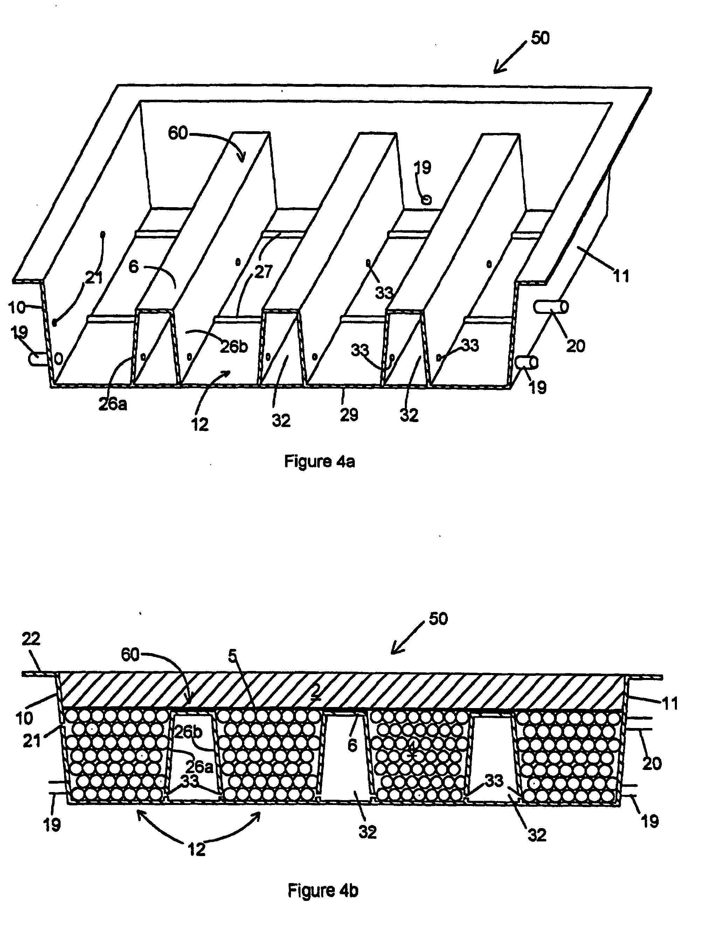

Les figures 4a et 4b représentent un bac (50) à réserve d'eau selon un quatrième mode de réalisation, dans lequel le fond se prolonge entre les parois verticales d'une cloison de séparation. Les cloisons forment ainsi, avec le fond, d'une part des renfoncements et, d'autre part un canal fermé (32) entre deux renfoncements (12) voisins. Les parois verticales des cloisons formant les renfoncements possèdent une ou plusieurs ouvertures (33) permettant de relier les renfoncements entre eux par l'intermédiaire des canaux (32). La réserve d'eau est ainsi constituée par un ensemble de renfoncements et de canaux fermés. Ce mode de réalisation permet d'obtenir une réserve d'eau de plus grande capacité, tout en conservant des surfaces support, nécessaires au maintien du substrat au-dessus du complexe drainant. Dans le cas d'un bac réalisé par moulage d'un matériau plastique, les canaux fermés peuvent être obtenus par injection de gaz, au moyen d'une première aiguille. L'injection de gaz s'effectuant avant le durcissement complet de la matière plastique, le gaz injecté permet de chasser la matière non durcie par l'intermédiaire d'une deuxième aiguille. Les ouvertures (33) peuvent également être obtenues lors du moulage, en utilisant des languettes, munies de tétons, disposées à intervalle régulier dans la matrice formant le moule.

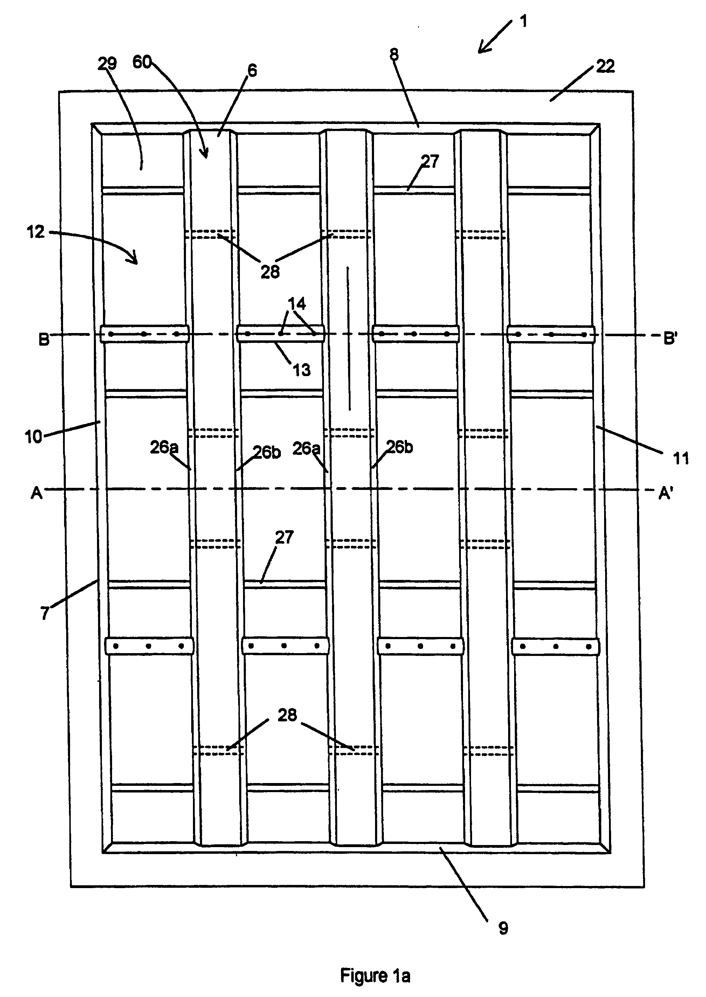

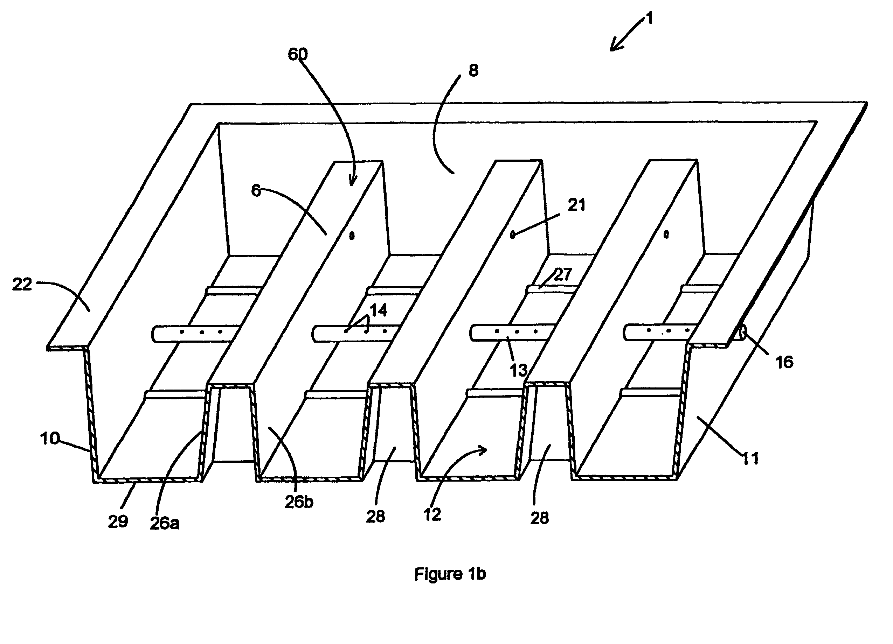

Les bacs selon l'invention peuvent comprendre des orifices (21, figures 1 b, 2a, 2b, 2c) de trop plein dont le positionnement peut varier suivant la hauteur maximum d'eau désirée dans le bac. Dans les trois premiers modes de réalisation, ces orifices (21) peuvent être formés sur les surfaces support (6). Pour éviter que le substrat soit en contact direct avec la réserve d'eau, plus particulièrement en cas de fortes précipitations, les orifices peuvent être présents sur la partie supérieure des parois verticales (26a, 26b) des renfoncements, à proximité de leurs bords supérieurs (18) Dans le cas d'un bac (30) selon le deuxième mode de réalisation, les orifices sont bien entendu disposés au-dessus des canaux (17) permettant le passage de l'eau entre les renfoncements. Quel que soit le mode de réalisation, les orifices de trop plein peuvent être disposés sur les parois longitudinales et/ou transversales, sensiblement au niveau ou en dessous des surfaces support.

Le fond (29) du bac peut comporter des nervures (27) de raidissement permettant de rigidifier le bac. A titre d'exemple, des nervures de raidissement sont positionnées parallèlement aux parois transversales du bac. La rigidification du bac peut être assurée ou complétée par des cloisons (28) de renfort positionnées entre les parois des renfoncements disposées en vis-à-vis. Suivant les modes de réalisation décrits ci-dessus, les cloisons de renfort sont disposées parallèlement aux parois transversales du bac.

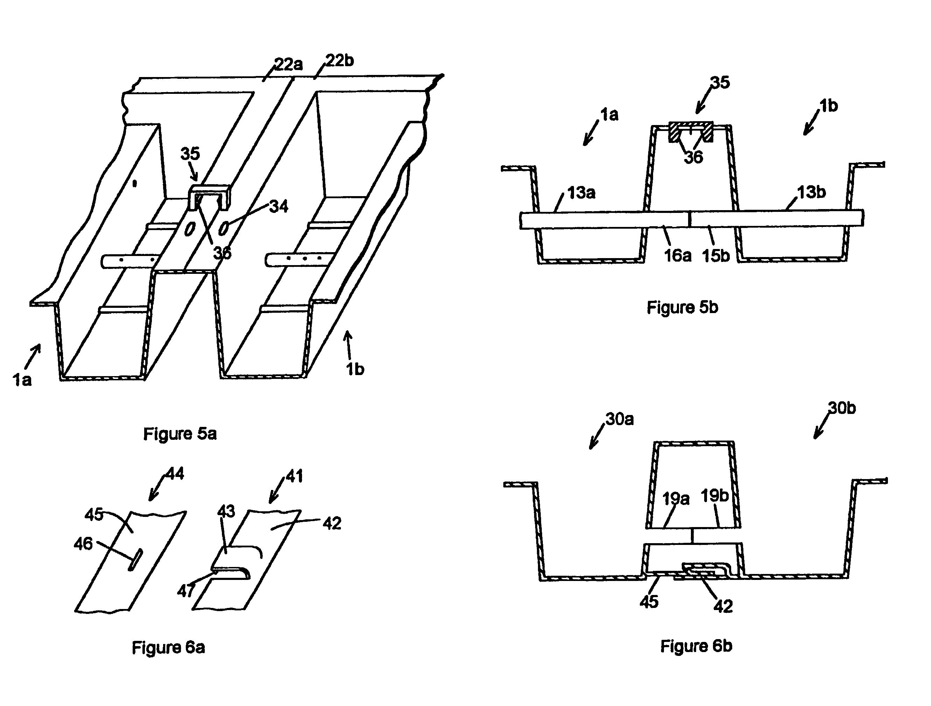

Les bacs peuvent comporter des moyens d'accrochage permettant d'accrocher les bacs les uns aux autres. Les figures 5a et 5b représentent respectivement une vue partielle en perspective et une vue partielle en coupe de deux bacs (1a, 1b), assemblés selon un mode de réalisation. L'accrochage s'effectue, par exemple, au moyen d'une pièce d'assemblage (35) en forme de U, chaque branche de ladite pièce présente un ergot (36) et est insérée dans une ouverture (34) d'une languette présente sur une paroi d'un bac, parallèlement au fond du bac, les ergots venant s'enclencher contre la surface inférieure des languettes. Les languettes peuvent être positionnées sur la partie inférieure de parois, à proximité du fond ou sensiblement dans le prolongement du fond. Les languettes peuvent également être constituées par les rebords (22a, 22b) des bacs. Les branches de la pièce d'accrochage (35) sont alors insérées dans des ouvertures (36) positionnées sur les rebords (22a, 22b) des bacs. L'accrochage de deux bacs peut être réalisé par une ou plusieurs pièces (35) d'assemblage.

L'accrochage des bacs peut également être effectué par l'intermédiaire de moyens complémentaires d'accrochage disposés sur deux parois opposées d'un bac. Les figures 6a et 6b représentent respectivement une vue partielle en perspective de deux moyens complémentaires d'accrochage et une vue partielle, en coupe, de deux bacs (30a, 30b) assemblés et munis desdits moyens d'accrochage. Suivant la figure 6a, un premier moyen d'accrochage (41) est, par exemple, constitué par une languette (42), dite première languette, présentant une patte (43), disposée parallèlement à la surface supérieure de la languette et pouvant être formée par deux découpes effectuées sur la languette. La surface inférieure de la patte possède un ergot (47). Le deuxième moyen d'accrochage (44), complémentaire du premier, est constitué par une deuxième languette (45) munie d'un ergot (46) sur sa surface supérieure. Suivant la figure 6b, les moyens d'accrochage peuvent être disposés sur la partie inférieure des parois des bacs. L'accrochage est réalisé en disposant la deuxième languette (45) sur la première languette (42), l'ergot (46) de la deuxième languette venant s'enclencher derrière l'ergot (47) de la patte (43) formée sur la première languette (42). Les première et deuxième languettes décrites ci-dessus peuvent être constituées par les rebords des bacs.

L'accrochage des bacs peut être assuré par les moyens de connexion des bacs, constitués par exemple par les extrémités (16a, 15b) des voies de communication (13a, 13b) permettant la connexion des réserves d'eau, tels que représentés à la figure 5b, ou par tous types de moyens de connexion (19a, 19b) présents sur les parois des bacs, tels que représentés à la figure 6b. Suivant la solidité et la rigidité des moyens de connexion utilisés, les moyens d'accrochage, décrits précédemment, peuvent être omis ou ajoutés pour assurer l'accrochage.

Ainsi, le procédé de végétalisation de support se caractérise en ce qu'il comporte les étapes suivantes :
- réalisation d'un complexe drainant dans des bacs (1) pour former une réserve d'eau dans la partie inférieure desdits bacs ;
- remplissage des bacs à réserve d'eau avec un substrat (2) de culture appropriée ;
- mise en place de la végétation (3) souhaitée sur le substrat, sous forme de semis, boutures ou rouleaux;
- culture de la végétation (3) dans les bacs à réserve d'eau ;
- pose des bacs précultivés à réserve d'eau sur la surface de pose ;

Selon une autre particularité, la réalisation du complexe drainant comprend la mise en place d'un filtre (5).

Selon une autre particularité, la réalisation du complexe drainant comprend
- la mise en place dans le fond des bacs d'agrégats minéraux (4) et,
- la mise en place du filtre (5) sur les agrégats minéraux.

Selon une autre particularité, la réalisation du complexe drainant comprend :
- la mise en place d'une grille et,
- la mise en place du filtre (5) sur ladite grille.

Selon une autre particularité, la culture de la végétation et/ou la pose des bacs comprend une étape d'assemblage des bacs les uns aux autres.

Selon une autre particularité, la culture de la végétation et/ou la pose des bacs comprend une étape de connexion des complexes drainant des différents bacs et /ou une étape de connexion du complexe drainant d'au moins un bac à une source d'eau.

De même, les bacs (1) à réserve d'eau utilisés dans le procédé selon l'invention se caractérisent en ce qu'ils comprennent un fond (29) de forme générale rectangulaire entourée d'un bord latéral (7) comprenant deux parois transversales (8, 9) et deux parois longitudinales (10, 11), une pluralité de cloisons de séparation (60) constituées de deux parois verticales (26a, 26b) et d'une surface support (6) reliant les bords supérieurs des deux parois verticales (26a, 26b), formant avec le fond (29), une pluralité de renfoncements (12), la hauteur des parois des cloisons (60) étant inférieure à la hauteur du bord latéral (7), lesdits renfoncements (12) étant reliés entre eux par des moyens de communication pour former une réserve d'eau, un filtre (5) microporeux tendu au-dessus des parois (26a, 26b) des cloisons renfoncements, une couche de substrat (2) de culture déposée sur le filtre, et des boutures ou graines semées et cultivées sur le substrat.

Selon une autre particularité, les renfoncements (12), en forme de canaux, sont disposés parallèlement aux parois longitudinales (10, 11) et se prolongent d'une paroi transversale (8) à l'autre (9).

Selon une autre particularité, les renfoncements (12) sont remplis d'agrégats minéraux (4), le filtre étant disposé sur les agrégats et les surfaces support (6).

Selon une autre particularité, une grille repose sur les surfaces support (6), le filtre étant disposé sur ladite grille.

Selon une autre particularité, chaque bac possède des moyens de connexion permettant de connecter la réserve d'eau à celle du ou des bacs adjacents et/ou à une source d'eau.

Selon une autre particularité, les moyens de communication sont constitués par au moins une voie de communication, (13) disposée parallèlement aux deux parois longitudinales ou transversales opposées, traversant de manière étanche de part en part les parois verticales des renfoncements (12) et possédant des ouvertures (14) dans ses portions comprises dans les renfoncements.

Selon une autre particularité, les extrémités (15, 16) d'une voie de communication (13) débouchent en dehors des renfoncements (12) et constituent les moyens de connexion.

Selon une autre particularité, les moyens de communication sont constitués par un ou plusieurs canaux (17), en forme de goulotte, formés sur les surfaces support (6) et reliant les bords (18) supérieurs des cloisons verticales formant les renfoncements (12).

Selon une autre particularité, les moyens de communication sont constitués par un ensemble de voies de communication (23, 24, 25) assemblées aux parois (26a, 26b) verticales formant les renfoncements, chaque tube reliant deux renfoncements (12) voisins.

Selon une autre particularité, le fond se prolonge entre les parois (26a, 26b) d'une cloison de séparation de façon à former un canal fermé (32) entre deux renfoncements (12) voisins, les moyens de communication étant constitués par une ou plusieurs ouvertures (33) traversant les parois verticales de part en part.

Selon une autre particularité, le bord latéral (7) comprend au moins un moyen de connexion (19, 20) débouchant sur un renfoncement et permettant de connecter le bac à une source d'eau et/ou à un bac adjacent.

Selon une autre particularité, le bord latéral (7), et/ou au moins une paroi verticale (26a, 26b) et/ou au moins une surface support (6), comporte au moins un orifice (21) de trop plein.

Selon une autre particularité, les parois transversales (8, 9) et/ou longitudinales (10, 11) se prolongent par un rebord (22) sensiblement horizontal.

Selon une autre particularité, les parois transversales (8, 9) et/ou longitudinales (10, 11) présentent des moyens d'accrochage permettant d'accrocher deux bacs adjacents.

Selon une autre particularité, les moyens de connexions constituent les moyens d'accrochage.

Selon une autre particularité, les moyens d'accrochage sont constitués par au moins une pièce d'accrochage (35) en forme de U, chaque branche de ladite pièce présentant un ergot (36), l'accrochage de deux bacs étant réalisé en insérant une branche dans une ouverture (34) d'une languette positionnée sur une paroi de chaque bac.

Selon une autre particularité, les moyens d'accrochage sont constitués par deux moyens complémentaires, un premier moyen d'accrochage (41) constitué par une première languette (42) sensiblement parallèle au fond, présentant une patte (43), disposée parallèlement à la surface supérieure de la languette et dont la surface inférieure de la patte possède un ergot (47) et un deuxième moyen d'accrochage (44) constitué par une deuxième languette (45), sensiblement parallèle au fond, munie d'un ergot (46) sur sa surface supérieure, l'accrochage de deux bacs (30a, 30b) étant réalisé en disposant la deuxième languette sur la première languette, l'ergot de la première languette venant s'enclencher derrière l'ergot de la patte formée sur la première languette.

Selon une autre particularité, le rebord constitue les languettes permettant l'accrochage de deux bacs.

Selon une autre particularité, le fond comprend des nervures (17) de raidissement.

Selon une autre particularité, les bacs à réserve d'eau comprennent une ou plusieurs cloisons (28) de renfort entre les parois (26a, 26b) verticales d'une ou plusieurs cloisons de séparation.

Selon une autre particularité, le bord latéral (7) comprend un épaulement (31) orienté vers l'intérieur du bac et disposé sensiblement dans le plan des surfaces support (6).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Procédé de végétalisation de support au moyen de bacs (1) à réserve d'eau selon la revendication 6, **caractérisé en ce qu'**il comporte les étapes suivantes :
- réalisation dans lesdits bacs (1) d'un complexe drainant comprenant une pluralité de renfoncements (12) séparés les un des autres par des cloisons (60) de séparation et reliés entre eux par des moyens de communication pour former une réserve d'eau dans une première partie dite inférieure des bacs (1 ), un filtre (5) microporeux étant mis en place sur au moins une surface support (6) des cloisons de séparation (60) ;
- remplissage des bacs à réserve d'eau avec un substrat (2) de culture appropriée, dans une partie dite supérieure des bacs (1) séparée de ladite partie inférieure par le filtre (5);
- mise en place de la végétation (3) souhaitée sur le substrat, sous forme de semis, boutures ou rouleaux;
- culture de la végétation (3) dans les bacs à réserve d'eau ;
- pose des bacs précultivés à réserve d'eau sur la surface de pose.

2. Procédé de végétalisation selon la revendication 1, **caractérisé en ce que** la réalisation du complexe drainant comprend
- la mise en place dans le fond des bacs d'agrégats minéraux (4) et,
- la mise en place du filtre (5) sur les agrégats minéraux.

3. Procédé de végétalisation selon la revendication 1, **caractérisé en ce que** la réalisation du complexe drainant comprend
- la mise en place d'une grille et,
- la mise en place du filtre (5) sur ladite grille.

4. Procédé de végétalisation selon l'une des revendications 1 à 3, **caractérisé en ce que** la culture de la végétation et/ou la pose des bacs comprend une étape d'assemblage des bacs les uns aux autres.

5. Procédé de végétalisation selon l'une des revendications 1 à 4, **caractérisé en ce que** la culture de la végétation et/ou la pose des bacs comprend une étape de connexion des complexes drainant des différents bacs et /ou une étape de connexion du complexe drainant d'au moins un bac à une source d'eau.

6. Bacs (1) à réserve d'eau utilisés dans le procédé selon l'une des revendications précédentes, comportant un fond (29) de forme générale rectangulaire entourée d'un bord latéral (7) comprenant deux parois transversales (8, 9) et deux parois longitudinales (10, 11 ), **caractérisé en ce que** lesdits bacs (1) comprennent une pluralité de cloisons de séparation (60) constituées de deux parois verticales (26a, 26b) et d'une surface support (6) reliant les bords supérieurs des deux parois verticales (26a, 26b), formant avec le fond (29) une pluralité de renfoncements (12), la hauteur des parois des cloisons (60) étant inférieure à la hauteur du bord latéral (7), lesdits renfoncements (12) étant reliés entre eux par des moyens de communication pour former une réserve d'eau, un filtre (5) microporeux étant tendu à l'intérieur des bacs (1) sur au moins une surface support (6) des cloisons (60) pour séparer ladite réserve d'eau d'une couche de substrat (2) de culture déposée sur le filtre, des boutures ou graines étant semées et cultivées sur le substrat.

7. Bacs (1) à réserve d'eau selon la revendication 6, **caractérisé en ce que** les renfoncements (12), en forme de canaux, sont disposés parallèlement aux parois longitudinales (10, 11) et se prolongent d'une paroi transversale (8) à l'autre (9).

8. Bacs (1) à réserve d'eau selon la revendication 6 ou 7, **caractérisé en ce que** les renfoncements (12) sont remplis d'agrégats minéraux (4), le filtre étant disposé sur les agrégats et les surfaces support (6).

9. Bacs (1) à réserve d'eau selon l'une des revendications 6 à 8, **caractérisé en ce qu'**une grille repose sur les surfaces support (6), le filtre étant disposé sur ladite grille.

10. Bacs à réserve d'eau selon l'une des revendications 6 à 9, **caractérisé en ce que** chaque bac possède des moyens de connexion permettant de connecter la réserve d'eau à celle du ou des bacs adjacents et/ou à une source d'eau.

11. Bacs (1) à réserve d'eau selon l'une des revendications 6 à 10, **caractérisé en ce que** les moyens de communication sont constitués par au moins une voie de communication, (13) disposée parallèlement aux deux parois longitudinales ou transversales opposées, traversant de manière étanche de part en part les parois verticales des renfoncements (12) et possédant des ouvertures (14) dans ses portions comprises dans les renfoncements.

12. Bacs à réserve d'eau selon la revendication 11, **caractérisé en ce que** les extrémités (15, 16) d'une voie de communication (13) débouchent en dehors des renfoncements (12) et constituent les moyens de connexion

13. Bacs (30) à réserve d'eau selon l'une des revendications 6 à 10, **caractérisé en ce que** les moyens de communication sont constitués par un ou plusieurs canaux (17), en forme de goulotte, formés sur les surfaces support (6) et reliant les bords (18) supérieurs des cloisons verticales formant les renfoncements (12).

14. Bacs (40) à réserve d'eau selon l'une des revendications 6 à 10, **caractérisé en ce que** les moyens de communication sont constitués par un ensemble de voies de communication (23, 24, 25) assemblées aux parois (26a, 26b) verticales formant les renfoncements, chaque tube reliant deux renfoncements (12) voisins.

15. Bacs (50) à réserve d'eau selon l'une des revendications 6 à 10, **caractérisé en ce que** le fond se prolonge entre les parois (26a, 26b) d'une cloison de séparation de façon à former un canal fermé (32) entre deux renfoncements (12) voisins, les moyens de communication étant constitués par une ou plusieurs ouvertures (33) traversant les parois verticales de part en part.

16. Bacs à réserve d'eau selon l'une des revendications 13 à 15, **caractérisé en ce que** le bord latéral (7) comprend au moins un moyen de connexion (19, 20) débouchant sur un renfoncement et permettant de connecter le bac à une source d'eau et/ou à un bac adjacent.

17. Bacs à réserve d'eau selon l'une des revendications 6 à 16, **caractérisé en ce que** le bord latéral (7), et/ou au moins une paroi verticale (26a, 26b) et/ou au moins une surface support (6), comporte au moins un orifice (21) de trop plein.

18. Bacs (1, 30, 40, 50) à réserve d'eau selon l'une des revendications 6 à 17, **caractérisé en ce que** les parois transversales (8, 9) et/ou longitudinales (10, 11 ) se prolongent par un rebord (22) sensiblement horizontal.

19. Bacs à réserve d'eau selon l'une des revendications 6 à 18, **caractérisé en ce que** les parois transversales (8, 9) et/ou longitudinales (10, 11) présentent des moyens d'accrochage permettant d'accrocher deux bacs adjacents.

20. Bacs à réserve d'eau selon la revendication 19, **caractérisé en ce que** les moyens de connexions constituent les moyens d'accrochage.

21. Bacs (1a, 1b) à réserve d'eau selon la revendication 19, **caractérisé en ce que** les moyens d'accrochage sont constitués par au moins une pièce d'accrochage (35) en forme de U, chaque branche de ladite pièce présentant un ergot (36), l'accrochage de deux bacs étant réalisé en insérant une branche dans une ouverture (34) d'une languette positionnée sur une paroi de chaque bac.

22. Bacs à réserve d'eau selon la revendication 19, **caractérisé en ce que** les moyens d'accrochage sont constitués par deux moyens complémentaires, un premier moyen d'accrochage (41) constitué par une première languette (42) sensiblement parallèle au fond, présentant une patte (43), disposée parallèlement à la surface supérieure de la languette et dont la surface inférieure de la patte possède un ergot (47) et un deuxième moyen d'accrochage (44) constitué par une deuxième languette (45), sensiblement parallèle au fond, munie d'un ergot (46) sur sa surface supérieure, l'accrochage de deux bacs (30a, 30b) étant réalisé en disposant la deuxième languette sur la première languette, l'ergot de la première languette venant s'enclencher derrière l'ergot de la patte formée sur la première languette.

23. Bacs à réserve d'eau selon la revendication 21 ou 22, **caractérisé en ce que** le rebord constitue les languettes permettant l'accrochage de deux bacs.

24. Bacs à réserve d'eau selon l'une des revendications 7 à 23, **caractérisé en ce que** le fond comprend des nervures (17) de raidissement.

25. Bacs à réserve d'eau selon l'une des revendications 7 à 24, **caractérisé en ce qu'**ils comprennent une ou plusieurs cloisons (28) de renfort entre les parois (26a, 26b) verticales d'une ou plusieurs cloisons de séparation.

26. Bacs à réserve d'eau selon l'une des revendications 7 à 25, **caractérisé en ce que** le bord latéral (7) comprend un épaulement (31) orienté vers l'intérieur du bac et disposé sensiblement dans le plan des surfaces support (6).

## Patentansprüche

1. Verfahren zur Flächenbegrünung mittels Wasservorratsbecken (1) nach Anspruch 6, **dadurch gekennzeichnet, dass** es folgende Schritte umfasst:
- Erstellen einer Drainageeinheit in den genannten Becken (1), die mehrere Vertiefungen (12) enthält, welche durch Trennwände (60) voneinander getrennt und über Verbindungsmittel miteinander verbunden sind, um in einem ersten, sogenannten unteren Bereich der Becken (1) einen Wasservorrat zu bilden, wobei ein Mikroporenfilter (5) an zumindest einer Tragfläche (6) der Trennwände (60) eingesetzt ist;
- Befüllen der Wasservorratsbecken mit einem geeigneten Pflanzsubstrat (2) in einem sogenannten oberen Bereich der Becken (1), der durch den Filter (5) vom genannten unteren Bereich getrennt ist;
- Einbringen der gewünschten Bepflanzung (3) in das Substrat in Form von Saat, Stecklingen oder Ballen;
- Aufzucht der Bepflanzung (3) in den Wasservorratsbecken;
- Verlegen der vorbepflanzten Wasservorratsbecken auf der Verlegefläche.

2. Verfahren zur Begrünung nach Anspruch 1, **dadurch gekennzeichnet, dass** das Erstellen der Drainageeinheit umfasst:
- Einbringen von Mineralstoffen (4) am Boden der Becken und
- Aufbringen des Filters (5) auf die Mineralstoffe.

3. Verfahren zur Begrünung nach Anspruch 1, **dadurch gekennzeichnet, dass** das Erstellen der Drainageeinheit umfasst:
- Einsetzen eines Gitters und
- Aufbringen des Filters (5) auf das Gitter.

4. Verfahren zur Begrünung nach einem der Ansprüche 1 bis 3, **dadurch gekennzeichnet, dass** die Aufzucht der Bepflanzung und/oder das Verlegen der Becken einen Schritt des Zusammenfügens der Becken umfasst.

5. Verfahren zur Begrünung nach einem der Ansprüche 1 bis 4, **dadurch gekennzeichnet, dass** die Aufzucht der Bepflanzung und/oder das Verlegen der Becken einen Schritt des Verbindens der Drainageeinheiten der verschiedenen Becken und/oder einen Schritt des Verbindens der Drainageeinheit mindestens eines Beckens mit einer Wasserquelle umfasst.

6. Wasservorratsbecken (1) in Verwendung bei dem Verfahren nach einem der vorangehenden Ansprüche, mit einem Boden (29) insgesamt in Form eines Rechtecks, der von einem Seitenrand (7) mit zwei Querwandungen (8, 9) und zwei Längswandungen (10, 11) umgeben ist, **dadurch gekennzeichnet, dass** die genannten Becken (1) mehrere Trennwände (60) enthalten, die aus zwei senkrechten Wandungen (26a, 26b) und einer Tragfläche (6) bestehen, welche die oberen Ränder der beiden senkrechten Wandungen (26a, 26b) verbindet, die mit dem Boden (29) mehrere Vertiefungen (12) bilden, wobei die Höhe der Wandungen der Trennwände (60) geringer ist als die Höhe des Seitenrands (7), wobei die genannten Vertiefungen (12) über Verbindungsmittel miteinander verbunden sind, um einen Wasservorrat zu bilden, wobei ein Mikroporenfilter (5) innerhalb der Becken (1) über zumindest eine Tragfläche (6) der Trennwände (60) gespannt ist, um den genannten Wasservorrat von einer auf den Filter gesetzten Pflanzsubstratschicht (2) zu trennen, wobei Stecklinge oder Samenkörner auf das Substrat aufgebracht und aufgezüchtet werden.

7. Wasservorratsbecken (1) nach Anspruch 6, **dadurch gekennzeichnet, dass** die kanalförmigen Vertiefungen (12) parallel zu den Längswandungen (10, 11) angeordnet sind und sich von einer Querwandung (8) zur nächsten (9) fortsetzen.

8. Wasservorratsbecken (1) nach Anspruch 6 oder 7, **dadurch gekennzeichnet, dass** die Vertiefungen (12) mit Mineralstoffen (4) befüllt sind, wobei der Filter auf den Mineralstoffen und auf den Tragflächen (6) angeordnet ist.

9. Wasservorratsbecken (1) nach einem der Ansprüche 6 bis 8, **dadurch gekennzeichnet, dass** auf den Tragflächen (6) ein Gitter aufliegt, wobei der Filter auf dem genannten Gitter angeordnet ist.

10. Wasservorratsbecken nach einem der Ansprüche 6 bis 9, **dadurch gekennzeichnet, dass** jedes Becken Verbindungsmittel besitzt, über die der Wasservorrat mit dem des bzw. der angrenzenden Becken und/oder mit einer Wasserquelle verbunden werden kann.

11. Wasservorratsbecken (1) nach einem der Ansprüche 6 bis 10, **dadurch gekennzeichnet, dass** die Verbindungsmittel aus mindestens einem Verbindungsweg (13) bestehen, der parallel zu den beiden gegenüberliegenden Längs- bzw. Querwandungen angeordnet ist, vollständig in dichter Weise die senkrechten Wandungen der Vertiefungen (12) durchquert und Öffnungen (14) in seinen Abschnitten besitzt, die in den Vertiefungen enthalten sind.

12. Wasservorratsbecken nach Anspruch 11, **dadurch gekennzeichnet, dass** die Endabschnitte (15, 16) eines Verbindungswegs (13) außerhalb der Vertiefungen (12) ausmünden und die Verbindungsmittel bilden.

13. Wasservorratsbecken (30) nach einem der Ansprüche 6 bis 10, **dadurch gekennzeichnet, dass** die Verbindungsmittel aus einem oder mehreren rinnenförmigen Kanälen (17) bestehen, die an den Tragflächen (6) ausgebildet sind und die oberen Ränder (18) der die Vertiefungen (12) bildenden senkrechten Wandungen verbinden.

14. Wasservorratsbecken (40) nach einem der Ansprüche 6 bis 10, **dadurch gekennzeichnet, dass** die Verbindungsmittel aus einer Einheit von Verbindungswegen (23, 24, 25) bestehen, die mit den die Vertiefungen bildenden senkrechten Wandungen (26a, 26b) zusammengefügt sind, wobei jedes Rohr zwei benachbarte Vertiefungen (12) verbindet.

15. Wasservorratsbecken (50) nach einem der Ansprüche 6 bis 10, **dadurch gekennzeichnet, dass** der Boden sich zwischen den Wandungen (26a, 26b) einer Trennwand so erstreckt, dass er einen geschlossenen Kanal (32) zwischen zwei benachbarten Vertiefungen (12) bildet, wobei die Verbindungsmittel aus einer bzw. mehreren Öffnungen (33) bestehen, welche die senkrechten Wandungen vollständig durchqueren.

16. Wasservorratsbecken nach einem der Ansprüche 13 bis 15, **dadurch gekennzeichnet, dass** der Seitenrand (7) zumindest ein Anschlussmittel (19, 20) enthält, das an einer Vertiefung mündet und es ermöglicht, das Becken an eine Wasserquelle und/oder an ein angrenzendes Becken anzuschließen.

17. Wasservorratsbecken nach einem der Ansprüche 6 bis 16, **dadurch gekennzeichnet, dass** der Seitenrand (7) und/oder zumindest eine senkrechte Wandung (26a, 26b) und/oder zumindest eine Tragfläche (6) mindestens eine Überlauföffnung (21) enthält.

18. Wasservorratsbecken (1, 30, 40, 50) nach einem der Ansprüche 6 bis 17, **dadurch gekennzeichnet, dass** die Querwandungen (8, 9) und/oder Längswandungen (10, 11) mit einer im wesentlichen horizontalen Umrandung (22) abschließen.

19. Wasservorratsbecken nach einem der Ansprüche 6 bis 18, **dadurch gekennzeichnet, dass** die Querwandungen (8, 9) und/oder Längswandungen (10, 11) Verhakungsmittel aufweisen, mit denen zwei aneinandergrenzende Becken verhakt werden können.

20. Wasservorratsbecken nach Anspruch 19, **dadurch gekennzeichnet, dass** die Anschlussmittel die Verhakungsmittel bilden.

21. Wasservorratsbecken (1a, 1b) nach Anspruch 19, **dadurch gekennzeichnet, dass** die Verhakungsmittel aus zumindest einem U-förmigen Verhakungsteil (35) bestehen, wobei der Schenkel des genannten Teils einen Vorsprung (36) aufweist, wobei das Verhaken zweier Becken dadurch erfolgt, dass ein Schenkel in eine Öffnung (34) einer Zunge eingefügt wird, die an einer Wandung eines jeden Beckens positioniert ist.

22. Wasservorratsbecken nach Anspruch 19, **dadurch gekennzeichnet, dass** die Verhakungsmittel aus zwei komplementären Mitteln bestehen, nämlich aus einem ersten Verhakungsmittel (41), das aus einer im wesentlichen parallel zum Boden verlaufenden ersten Zunge (42) besteht, die eine Lasche (43) aufweist, die parallel zur oberen Fläche der Zunge angeordnet ist, deren untere Fläche der Lasche einen Vorsprung (47) besitzt, und aus einem zweiten Verhakungsmittel (44), das aus einer zweiten Zunge (45) besteht, die im wesentlichen parallel zum Boden verläuft und an seiner oberen Fläche mit einem Vorsprung (46) versehen ist, wobei das Verhaken der beiden Becken (30a, 30b) dadurch erfolgt, dass die zweite Zunge auf die erste Zunge angeordnet wird, wobei der Vorsprung der ersten Zunge hinter dem Vorsprung der an der ersten Zunge gebildeten Lasche einrastet.

23. Wasservorratsbecken nach Anspruch 21 oder 22, **dadurch gekennzeichnet, dass** die Umrandung die Zungen bildet, welche das Verhaken zweier Becken ermöglichen.

24. Wasservorratsbecken nach einem der Ansprüche 7 bis 23, **dadurch gekennzeichnet, dass** der Boden Versteifungsrippen (17) enthält.

25. Wasservorratsbecken nach einem der Ansprüche 7 bis 24, **dadurch gekennzeichnet, dass** sie eine bzw. mehrere Wände (28) zur Verstärkung zwischen den senkrechten Wandungen (26a, 26b) einer oder mehrerer Trennwände enthalten.

26. Wasservorratsbecken nach einem der Ansprüche 7 bis 25, **dadurch gekennzeichnet, dass** der Seitenrand (7) eine Schulter (31) enthält, die zum Inneren des Beckens gerichtet und im wesentlichen in der Ebene der Tragflächen (6) angeordnet ist.

## Claims

1. Process for greening areas by means of containers (1) with a water reserve, according to Claim 6, **characterised in that** it comprises the following stages:
- the construction in said containers (1) of a draining complex comprising a plurality of reinforcements (12) separated by separating partitions (60) interconnected by means of communication to form a water reserve in a first so-called lower section of the containers (1), and a microporous filter (5) installed on at least one support face (6) of the separating partitions (60);
- filling the water reserve containers with a suitable culture substrate (2), in the so-called upper section of the containers (1), separated from said lower section by the filter (5);
- positioning of the desired vegetation (3) on the substrate, in the form of seedlings, cuttings or rolls;
- cultivation of the vegetation (3) in the water reserve containers;
- positioning of the pre-cultivated water reserve containers on the laying surface.

2. Greening process according to claim 1, **characterised in that** the construction of the draining complex comprises
- the installation of mineral aggregates (4) on the bottom of the containers and
- the installation of the filter (5) on the mineral aggregates.

3. Greening process according to claim 1, **characterised in that** the construction of the draining complex comprises
- the installation of a grill, and
- the installation of the filter (5) on said grill

4. Greening process according to one of claims 1 to 3, **characterised in that** the cultivation of the vegetation and/or the installation of the containers includes a stage where the containers are placed one on top of the other.

5. Greening process according to one of claims 1 to 4, **characterised in that** the cultivation of the vegetation and/or the installation of the containers includes a phase in which the draining complexes of the different containers are connected together and/or a stage in which the draining complex of at least one container is connected to a water source.

6. Water reserve containers (1) used in the process according to one of the preceding claims, comprising a button (29) of a generally rectangular shape, surrounded by a lateral edge (7), comprising two transverse walls (8, 9) and two longitudinal walls (10, 11), **characterised in that** said containers (1) include a plurality of separating partitions (60) consisting of two vertical walls (26a, 26b) and one support face (6) connecting the upper edges of the two vertical walls (26a. 26b), forming with the bottom (29) a plurality of reinforcements (12), wherein the height of the walls of the partitions (60) is lower than the height of the lateral edge (7), and said reinforcements (12) are connected to each other by means of communication to form a water reserve, a microporous filter (5) is suspended from the inside of the containers (1) on at least one support face (6) of the partitions (60) to separate said water reserve from a layer of culture substrate (2) deposited on the filter, and wherein cuttings or grains are sown and cultivated on the substrate.

7. Water reserve containers (1) according to claim 6, **characterised in that** the reinforcements (12), in the form of channels, are arranged in parallel with the longitudinal walls (10, 11) and extend from one transverse wall (8) to the other (9).

8. Water reserve containers (1) according to claim 6 or 7, **characterised in that** the reinforcements (12) are filled with mineral aggregates (4), wherein the filter is arranged on the aggregates and the support faces (6).

9. Water reserve containers (1) according to one of claims 6 to 8, **characterised in that** a grill rests on the support faces (6), wherein the filter is arranged on said grill.

10. Water reserve containers according to one of claims 6 to 9, **characterised in that** each container is provided with means of connection enabling the water reserve to be connected to that of the adjacent container or containers and/or to a water source.

11. Water reserve containers (1) according to one of claims 6 to 10, **characterised in that** the means of communication consist of at least one path of communication (13) which is arranged in parallel with the two opposing longitudinal or transversal walls, crosses the vertical walls of the reinforcements (12) at various points so that they remain leak-tight, and is being provided with openings (14) in its portions included in the reinforcements.

12. Water reserve containers according to claim 11, **characterised in that** the ends (15, 16) of one communication path (13) terminate outside the reinforcements (12) and constitute the means of connection.

13. Water reserve containers (30) according to one of claims 6 to 10, **characterised in that** the means of communication consist of one or more channels (17), in the form of neck, formed on the support faces (6) and connecting the upper edges (18) of the vertical partitions forming the reinforcements (12).

14. Water reserve containers (40) according to one of claims 6 to 10, **characterised in that** the means of communication consist of a series of paths of communication (23, 24, 25) assembled on the vertical walls (26a, 26b) forming the reinforcements, wherein each tube connects two adjacent reinforcements (12).

15. Water reserve containers (50) according to one of claims 6 to 10, **characterised in that** the bottom extends between the walls (26a, 26b) of a separating partition to form a dosed channel (32) between two adjacent reinforcements (12), wherein the means of communication consists of one or more openings (33) crossing the vertical walls at various points.

16. Water reserve containers according to one of claims 13 to 15, **characterised in that** the lateral edge (7) comprises at least one means of connection (19, 20) terminating at a reinforcement and enabling the container to be connected to a water source and/or adjacent container.

17. Water reserve containers according to one of claims 6 to 16, **characterised in that** the lateral edge (7) and/or at least one vertical wall (26a, 26b) and/or at least one support face (6) comprises at least one overflow port (21)

18. Water reserve containers (1, 30, 40, 50) according to one of claims 6 to 17, **characterised in that** the transverse (8, 9) and/or longitudinal walls (10, 11) extend through an essentially horizontal edge (22).

19. Water reserve containers according to one of claims 6 to 18, **characterised in that** the transverse (8, 9) and/or longitudinal walls (10, 11) are provided with coupling means enabling two adjacent containers to be coupled together.

20. Water reserve containers according to claim 19, **characterised in that** the means of connection constitute the coupling means.

21. Water reserve containers (1a, 1b) according to claim 19, **characterised in that** the coupling means consist of at least one U-shaped coupling piece (35), wherein each branch of said piece is provided with a lug (36), the two containers being coupled by the insertion of a branch in an opening (34) of a tongue positioned on one wall of each container

22. Water reserve containers according to claim 19, **characterised in that** the coupling means consist of two additional means, a first coupling means (41) consisting of a first tongue (42) essentially parallel with the bottom and exhibiting a leg (43) arranged parallel with the upper surface of the tongue, the lower surface of the leg being provided with a lug (47), and a second coupling means (44) consisting of a second tongue (45) essentially parallel with the bottom and provided with a lug (46) on its upper surface, wherein the two containers (30a, 30b) are coupled together by arranging the second tongue on the first tongue, the lug of the first tongue engaging behind the lug of the leg formed on the first tongue.

23. Water reserve containers according to claim 21 or 22, **characterised in that** the edge constitutes the tongues enabling two containers to be coupled together.

24. Water reserve containers according to claims 7 to 23, **characterised in that** the bottom is provided with stiffening ribs (17).

25. Water reserve containers according to one of claims 7 to 24, **characterised in that** they comprise one or more reinforcing partitions (28) between the vertical walls (26a, 26b) of one or more separating partitions.

26. Water reserve containers according to one of claims 7 to 25, **characterised in that** the lateral edge (7) comprises a shoulder (31) orientated toward the inside of the container and arranged essentially in the plane of the support faces (6).
